# EUROPÄISCHE PATENTSCHRIFT

(11) **EP 2 736 049 B1**
(45) Veröffentlichungstag und Bekanntmachung des Hinweises auf die Patenterteilung: **03.01.2018**
(21) Anmeldenummer: 12306458.6
(22) Anmeldetag: 23.11.2012
(51) Int. Cl.: H01B 3/44, C08K 5/378, C08K 5/47, C08K 5/3447

(54) **Lagerstabile vernetzbare Polymermischung auf Basis chlorierten Polymers**
Storage-stable crosslinkable polymer mixture based on chlorinated polymer
Mélange polymère réticulable stable au stockage à base de polymère chloré

(43) Veröffentlichungstag der Anmeldung: 28.05.2014
(73) Patentinhaber: Nexans, 92400 Courbevoie (FR)
(72) Erfinder: Niehaus, Armin, 5911 GE Venlo (NL); Roos, Andreas, Dr., 40547 Düsseldorf (DE)
(74) Vertreter: Feray, Valérie

(56) Entgegenhaltungen:
- JP-A- 2002 060 550
- US-A- 5 483 006
- US-A1- 2011 092 358
- WARRACH W ET AL: "A curative for chlorobutyl rubber 3-methylthiazolidinethione-2", ELASTOMERICS, COMMUNICATION CHANNELS, ATLANTA, GA, US, Bd. 116, Nr. 11, 1. Januar 1984 (1984-01-01), Seiten 26-29, XP009127721, ISSN: 0146-0706

## Beschreibung

Die vorliegende Erfindung betrifft eine vernetzbare Polymermischung auf Basis eines chlorierten Polymers, insbesondere auf Basis von schwefelfreiem Polychloropren (Typen "W" und/oder "T"), optional in Mischung mit zumindest einem anderen vernetzbaren Polymer, zum Beispiel Naturkautschuk (NR) und/oder Styrol-Butadien-Kautschuk (SBR) zur Verwendung für die Herstellung von Kabeln und Leitungen durch Extrusion und anschließender Vernetzung, insbesondere durch Wärme und/oder Bestrahlung. Weiter betrifft die Erfindung ein Verfahren zur Herstellung von Kabeln und Leitungen mit der erfindungsgemäßen Polymermischung, die im Anschluss an die Herstellung durch Mischung der Inhaltsstoffe extrudiert und vernetzt wird. Dort zeichnet sich die erfindungsgemäße Polymermischung dadurch aus, dass sie im Anschluss an ihre Herstellung durch Mischung, vor der anschließenden Extrusion und Vernetzung lagerstabil ist, insbesondere für zumindest 20 Tage, bevorzugt für zumindest 28 Tage, jeweils bei Raumtemperatur (RT), wobei die Polymermischung nach ihrer Extrusion und Vernetzung auch nach der zwischenzeitlichen Lagerung ausreichende mechanische Festigkeiten aufweist. Weiter betrifft die Erfindung Leitungen und Kabel, die die erfindungsgemäße Polymermischung aufweisen, die durch Mischen ihrer Bestandteile, anschließende Extrusion mit Vernetzung erhältlich sind, optional mit einer Lagerung zwischen der Herstellung der Polymermischung und ihrer Extrusion.

### Stand der Technik

Die englische Zusammenfassung der JP 61016938 beschreibt eine Mischung aus Chloroprengummi mit einem Gehalt an einer Hydrazinverbindung und Magnesiumoxid mit einem Peroxid als Vernetzungsmittel.

N, N'- Ethylenthioharnstoff ist als Vernetzungsmittel bekannt.

### Aufgabe der Erfindung

Der Erfindung stellt sich die Aufgabe, eine alternative Polymermischung auf Basis eines chlorierten Polymers bereitzustellen, das insbesondere Polychloropren ist, optional in Mischung mit zumindest einem anderen vernetzbaren Polymer (zum Beispiel NR, SBR), mit einem Gehalt an mineralischen Füllstoffen, Weichmachern, Alterungsschutzmitteln, Verarbeitungshilfsmitteln und einem Vernetzungssystem, die nach Mischen ihrer Bestandteile lagerstabil ist, insbesondere für zumindest 28 Tage, bei RT bestimmt, sodass die Mischung nach der an die Lagerung anschließenden Extrusion und Vernetzung im Wesentlichen die mechanischen Eigenschaften aufweist, die nach kürzerer Lagerzeit vor der Extrusion, bzw. im Wesentlichen ohne Lagerzeit vor der Extrusion von der extrudierten und vernetzten Polymermischung erreicht werden.

### Allgemeine Beschreibung

Bei der Vorbereitung der Erfindung hat sich herausgestellt, dass eine Polymermischung, die ein Vernetzungssystem mit einem Gehalt an N,N'-Ethylenthioharnstoff (ETU) aufweist, eine verhältnismäßig geringe Lagerstabilität hat, die sich dadurch ausdrückt, dass durch die Lagerung der Mischung im Anschluß an ihre Herstellung und vor deren Extrusion mit anschließender Vernetzung die daraus hergestellte vernetzte Mischung mechanischen Eigenschaften, die mit zunehmender Dauer der Lagerung vor der Extrusion und Vernetzung abnehmen. Mit zunehmender Dauer der Lagerung kommt es außerdem zu einer erhöhten Häufigkeit von Oberflächenfehlern der aus der vernetzbaren Mischung extrudierten Schichten, die durch anvernetzte Mischung entstehen können.

Die Erfindung löst die Aufgabe mit den Merkmalen der Ansprüche und insbesondere mit der erfindungsgemäßen Polymermischung und dem Verfahren zur Herstellung von Kabeln und Leitungen mit dieser Polymermischung.

Beim Verfahren zur Herstellung von Kabeln und Leitungen ist die vernetzbare Polymermischung durch Mischen ihrer Bestandteile herzustellen und beispielsweise zu einem Strang oder Granulat zu formen. Das Mischen kann in einer herkömmlichen Mischvorrichtung, beispielsweise einem Kneter und/oder Mischextruder erfolgen. Diese vernetzbare Polymermischung wird nach Lagerung, z.B. in einem Vorratsbehälter, in einem Extruder plastifiziert und zu einer Schicht eines Kabels oder einer Leitung extrudiert, beispielsweise als Zwischenschicht oder Außenmantel eines Kabels bzw. einer Leitung. Unmittelbar im Anschluss an die Extrusion der vernetzbaren Mischung als Schicht eines Kabels oder einer Leitung folgt die Vernetzung der extrudierten vernetzbaren Polymermischung zu der vernetzten Polymermischung. Die Vernetzung erfolgt bevorzugt durch Erwärmen, beispielsweise auf eine Temperatur von zumindest 150 °C, insbesondere auf 180 °C bis 220 °C, bevorzugt bei einem Druck von 12 bis 22 bar, bevorzugt bei 16 bis 20 bar. Entsprechend ist die noch nicht vernetzte Polymermischung eine vernetzbare Polymermischung, die durch die Vernetzung zur vernetzten Polymermischung umgesetzt wird. Optional kann die vernetzbare Polymermischung nach ihrer Herstellung durch Mischen ihrer Bestandteile vor der Extrusion als Schicht eines Kabels bzw. einer Leitung mit anschließender Vernetzung gelagert werden, z.B. für zumindest 20 d, bevorzugt für zumindest 28 d, z.B. bei RT.

Die Polymermischung, die insbesondere eine Mantelmischung ist, weist auf oder besteht aus Polychloropren, das insbesondere schwefelfrei ist, optional mit zumindest einem anderen vernetzbaren Polymer (zum Beispiel NR, SBR), mit Füllstoffen und Zuschlagsstoffen, sowie mit einem Vernetzungssystem.

Diese Füllstoffe und Zuschlagsstoffe sind insbesondere zumindest ein mineralischer Füllstoff, insbesondere Kieselsäure und/oder gebranntes Kaolin, insbesondere zu 20 bis 100 phr, z.B. 40 bis 100 phr, insbesondere 30 bis 60 phr Kieselsäure, bevorzugt 30 bis 50 phr Kieselsäure oder 40 bis 50 phr Kieselsäure und 5 bis 40 phr, insbesondere 10 bis 20 phr Kaolin,
optional Farbstoff, bevorzugt Pigmentfarbstoff, in Kombination mit Titandioxid zu 2 bis 10 phr, insbesondere zu 4 bis 8 phr,
zumindest ein Weichmacher, z.B. zu 2 bis 30 phr, insbesondere zu 5 bis 15, beispielsweise Dioktyladipat, Dioktylsebazat und/oder Diphenylkresylphosphat,
Alterungsschutzmittel, insbesondere zu 2 bis 10 phr, bevorzugt zu 4 bis 8 phr, z.B. 6 phr, beispielsweise ausgewählt aus oktyliertem Diphenylamin (ODPA) und Pentaerythitol-bis(tetrahydro-benzaldehyd-acetal),
Verarbeitungshilfsmittel, insbesondere Wachs, Ozonschutzwachs, Fettsäurederivate und/oder Paraffin, beispielsweise zu 3 bis 16 phr, bevorzugt zu 4 bis 14, insbesondere 12-13 phr, Haftvermittler, z.B. Tris-(2-hydroxyethyl)-amin, insbesondere zu 0,5 bis 4 phr,
ein Vernetzungssystem, das aufweist oder besteht aus Methyl-2-mercaptobenzimidazol, insbesondere zu 0,3 bis 2 phr, bevorzugt 0,5 bis 1,0 phr, Silan, im Besonderen Trimethoxyvinylsilan, insbesondere zu 0,5 bis 4 phr, bevorzugt 1,0 bis 2,0 phr, 3-Methyl-2-thiazolidinthion, insbesondere zu 0,5 bis 4,0 phr, bevorzugt zu 1 bis 2,5 phr, , sowie 2-Mercaptobenzothiazoldisulfid, insbesondere zu 0,3 bis 2 phr, bevorzugt 0,5 bis 1,5 phr, Stabilisator, insbesondere MgO, z.B. zu 3 bis 6 phr,
ZnO, insbesondere zu 3 bis 6 phr, in Bezug auf
100 phr Polychloropren, optional mit einem Anteil von zumindest einem anderen vernetzbaren Polymer (zum Beispiel 0 bis 40 phr NR, SBR oder einer Mischung dieser). Die in den Mischungen angegeben Teile sind als phr (parts per hundred rubber) angegeben, d.h. die Gewichtsanteile der Bestandteile sind auf einhundert Gewichtsanteile organisches Polymer, ausgewählt aus Polychloropren, optional mit einem Anteil von zumindest einem anderen vernetzbaren Polymer (zum Beispiel NR, SBR), z.B. mit einem Anteil von 10 bis 40 phr, wobei der Anteil Polychloropren um den von Anteil von 10 bis 40 phr vermindert ist. Daher entsprechen phr Gew.-% in Bezug auf den Gehalt an organischem vernetzbarem Polymer.

Das Polychloropren hat eine Mooney-Viskosität (ML1+4, 100 °C) von 30 bis 130, bevorzugt 40 bis 80. Die Mischung ist frei von Ethylenthioharnstoff Es hat sich gezeigt, dass die Polymermischung nach ihrer Herstellung durch Mischen ihrer Bestandteile für eine längere Zeitdauer lagerstabil ist, während derer die mechanischen Eigenschaften der daraus durch Vernetzung hergestellten vernetzten Polymermischung ausreichende Werte aufweisen, als im Wesentlichen identische Vergleichsmischungen aus denselben Bestandteilen mit Ausnahme des Vernetzungssystems, das Ethylenthioharnstoff enthält. Erfindungsgemäße vernetzbare Polymermischungen weisen bevorzugt z.B. eine Mooney-Anvulkanisationszeit T5 bei 121 °C von zumindest 800 s auf, unmittelbar nach Herstellung der Mischung, d.h. ohne Lagerung, und auch nach einer Lagerung für 7d bei 40 °C bzw. 28 Tage bei RT, während eine Vergleichsmischung, die bis auf das Vernetzungssystem auf Basis von Ethylenthioharnstoff identisch war, ohne oder nach identischer Lagerung nur noch einen Wert von ca. 750 s erreichte.

Weiterhin zeigen erfindungsgemäße Polymermischungen, insbesondere nach einer Lagerung vor ihrer Extrusion und Vernetzung für eine Dauer, die z.B. einer Lagerung für 7d bei 40°C entspricht, eine verbesserte Verarbeitbarkeit und resultierende Oberflächenqualität als im Wesentlichen identische Vergleichsmischungen aus denselben Bestandteilen mit Ausnahme des Vernetzungssystems, das N,N'-Ethylenthioharnstoff enthält. Die verbesserte Verarbeitbarkeit zeigt sich z.B. darin, dass die erfindungsgemäßen Polymermischungen eine bessere Fließfähigkeit haben und eine längere Verarbeitungszeit erlauben, bevor unerwünschte Anvemetzungen auftreten, die spätere Oberflächenfehler einer extrudierten Schicht zur Folge haben, als im Wesentlichen identische Vergleichsmischungen aus denselben Bestandteilen mit Ausnahme des Vernetzungssystems, das N,N'-Ethylenthioharnstoff enthält.

Erfindungsgemäße Polymermischungen haben den Vorteil, dass sich die Mooney-Viskosität (ML1+4 bei 100°C) über eine Lagerung der vernetzbaren Polymermischung weniger stark verändert als die von Vergleichsmischungen aus im Wesentlichen identischen Bestandteilen, jedoch mit einem Vernetzungssystem auf Basis von N,N'-Ethylenthiohamstoff. Eine Lagerung der vernetzbaren Polymermischung kann z.B. einer Lagerung für zumindest 20 d, bevorzugt zumindest 28 d bei 40°C entsprechen. Weiterhin liegt die Mooney-Viskosität vernetzbarer erfindungsgemäßer Polymermischungen in dem Bereich, in dem die Mooney-Viskosität von nicht gelagerten vernetzbaren Vergleichsmischungen liegt, die aus im Wesentlichen identischen Bestandteilen, jedoch mit einem Vernetzungssystem auf Basis von N,N'-Ethylenthiohamstoff bestehen.

Kabel und Leitungen mit einer Schicht aus der erfindungsgemäßen vernetzten Polymermischung zeichnen sich dadurch aus, dass diese Schicht keinen freien Ethylenthioharnstoff und keine Reaktionsprodukte von N,N'-Ethylenthioharnstoff enthält. Die mechanischen Eigenschaften liegen im Bereich der Werte, die mit im Wesentlichen identischen Vergleichsmischungen aus denselben Bestandteilen, die mit Ausnahme des Vernetzungssystems, das N,N'-Ethylenthioharnstoff enthält, erreicht werden. Dies sind für die beschriebene Mischung z.B. eine Zugfestigkeit von 14,8 bis 15,8 N/mm² und eine Reißdehnung von 700 bis 850 % für die vernetzte Polymermischung, die aus vernetzbarer Polymermischung nach Lagerung für 7 d bei 40°C hergestellt wurden, in Bezug zu vernetzter Polymermischung, die ohne zwischenzeitliche Lagerung aus vernetzbarer Polymermischung hergestellt wurde.

### Genaue Beschreibung

Die Erfindung wird nun genauer an Hand von Beispielmischungen mit Bezug auf die Figuren beschrieben, von denen
- Fig. 1 Daten zur Mooney-Viskosität ohne und nach Lagerung vernetzbarer Polymermischungen und
- Fig. 2 Daten zur Mooney-Scorch Viskosität zeigen.

Die folgenden Polymermischungen wurden durch Mischen ihrer Bestandteile in einem Laborkneter unter üblichen Bedingungen hergestellt:

**Tabelle 1: Polymermischungen, Anteile in phr in Bezug auf Polychloropren**

| Bestandteil | Mischung ETU (Vergleich) | erfindungsgemäße Mischung MTT1 | erfindungsgemäße Mischung MTT2 |
|---|---|---|---|
| Polychloropren | 100 | 100 | 100 |
| min. Füllstoff: Kieselsäure | 45 | 45 | 45 |
| min. Füllstoff: gebranntes Kaolin | 10 | 10 | 10 |
| Farbstoff (TiO₂, Microlen Gelb B3RS-MC) | 5,4 | 5,4 | 5,4 |
| Weichmacher | 8 | 8 | 8 |
| Alterungsschutzmittel | 6 | 6 | 6 |
| Verarbeitungshilfsmittel | 12,5 | 12,5 | 12,5 |
| Antioxidationsmittel | 3 | 3 | 3 |
| 70%-ig Methyl-2-mercaptobenzimidazol | 0,7 | 0,7 | 0,7 |
| N,N'-Ethylenthioharnstoff (80 Gew.-% auf Polymerträger) | 1,2 | 0 | 0 |
| Trimethoxymethylsilan | 0 | 2,0 | 2,0 |
| 50%-ig Bis(3-triethoxysilyl-propyl)tetrasulfan auf Wachsträger | 1,0 | 0 | 0 |
| 80 %-ig 3-Methyl-2-thiazolidinthion | 0 | 2,0 | 2,5 |
| 80%-ig 2-Mercaptobenzothiazoldisulfid | 1,2 | 1,2 | 1,2 |
| Stabilisator MgO | 5 | 5 | 5 |
| Katalysator ZnO | 5 | 5 | 5 |

Als Weichmacher wird bevorzugt eine Mischung aus Dioktyladipat und/oder Dioktylsebacat und/oder Diphenylkresylphosphat verwendet.

Als Alterungsschutzmittel wird bevorzugt eine Mischung aus oktyliertem Diphenylamin (ODPA), einem Bisphenoltyp (zum Beispiel 2,2'-Methylen-bis-(4-methyl-6-tert.-butylphenol) und einem zyklischen Acetal (zum Beispiel Pentaerythritolbis(tetrahydrobenzaldehydacetal)) eingesetzt.

Das Vernetzungssystem der Vergleichsmischung ETU bestand aus 1,2 phr 80%-igem N,N'-Ethylenthioharnstoff, 0,7 phr 70%-igem Methyl-2-mercaptobenzimidazol, 1,0 phr 50%-igem Bis(3-triethoxysilylpropyl)tetrasulfan auf Wachsträger und 1,2 phr 80%-igem 2-Mercaptobenzothiazoldisulfid.

Diese vernetzbaren Polymermischungen wiesen die Viskositäten der folgenden Tabelle 2 auf:

**Tabelle 2: Viskositäten der vernetzbaren Polymermischungen**

| Viskositätsmessung | Prüfparameter | Einheit | Mischung ETU | Mischung MTT1 | Mischung MTT2 |
|---|---|---|---|---|---|
| ML1+4 | 100°C | MU | 42 | 37 | 36 |
| MST5 | 121°C | m:s | 13:1 | 34:21 | 34:33 |
| RheometerT2 | 180°C/12min | m:s | 1:07 | 2:52 | 2:31 |
| Rheometer T90 | 180°C/12min | m:s | 6:32 | 7:29 | 7:01 |
| Rheometer ML | 180°C/12min | dNm | 0,98 | 0,98 | 0,88 |
| Rheometer MH | 180°C/12min | dNm | 13,34 | 10,27 | 10,27 |

Die Viskositätsmessung ML 1+4 erfolgt generell mit großem Rotor (38,1mm Durchmesser) bei 100°C, wobei das Vorheizintervall und das Messintervall in Minuten angegeben sind (1 min bzw. 4 min),
die Messung der Mooney-Anvulkanisationszeit (MST5) erfolgt bei 121°C.
Die MDR-Messung für die Werte T2 (Zeit für den Anstieg auf 2% des Plateau Wertes im MDR), T90 (Zeit für den Anstieg auf 90% des Plateau Wertes im MDR), ML (niedrigster Wert der MDR Messung) und MH (höchster Wert der MDR Messung) erfolgt bei 180°C.

Die Ergebnisse der Messung ML1+4 zeigen, dass das Maß für die Fließfähigkeit bei den erfindungsgemäßen Mischungen MTT1 und MTT2 besser ist als bei der Vergleichsmischung ETU.

Die längeren Zeiten bei der Messung MST5 und bei der Messung Rheometer T2 zeigen, dass die erfindungsgemäßen Mischungen einen größeren zeitlichen Spielraum bei der Extrusion erlauben, bevor unerwünschte anfängliche Vernetzungserscheinungen auftreten, die z.B. zu Oberflächenfehlern einer extrudierten Mantelschicht aus der Mischung führen.

Diese Messwerte zeigen, dass die erfindungsgemäßen Mischungen auf Grund des Vernetzungssystems bestehend aus Trimethoxysilan, Methyl-2-mercaptobenzimidazol, 2-Mercaptobenzothialzoldisulfid und 3-Methyl-2-thiazolidinthion, jedoch ohne N,N'-Ethylenthioharnstoff besser verarbeitbar sind als die Vergleichsmischung, die ein Vernetzungssystem mit einem Gehalt an N,N'-Ethylenthioharnstoff enthielt.

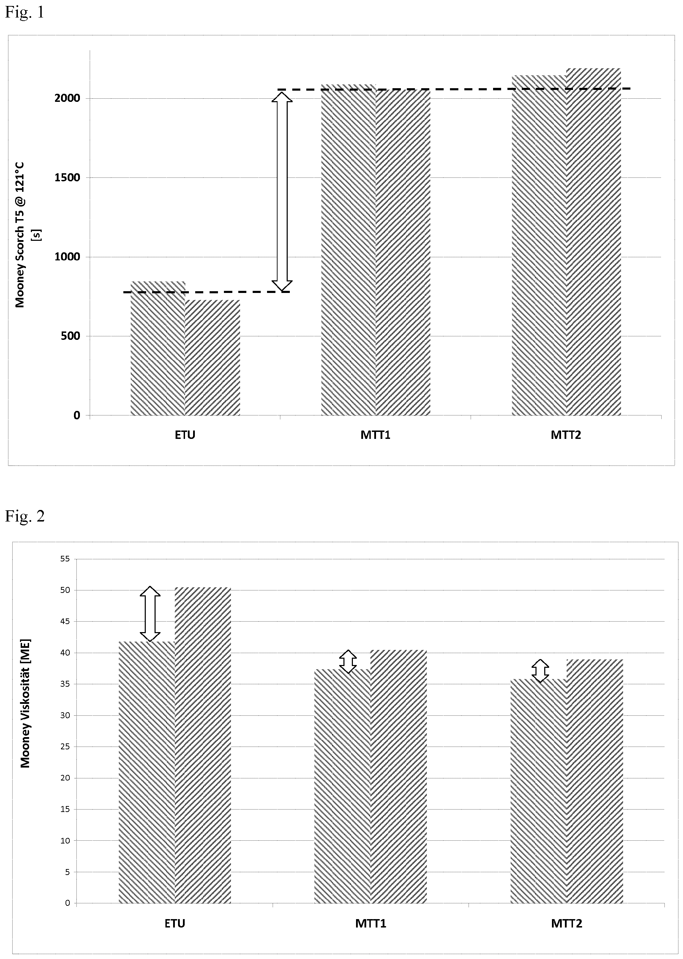

Die Viskositäten der vernetzbaren Polymermischungen wurden im Mooney-Viskosimeter bei 100°C bestimmt, einmal ohne Alterung, z.B. etwa 2-10 h nach Mischen der Bestandteile, und einmal nach künstlicher Alterung der vernetzbaren Polymermischungen durch Lagern bei 40°C für 7 d (Tage) als Beispiel für eine Lagerung der vernetzbaren Polymermischung vor der Extrusion und Vernetzung. Die Ergebnisse sind in Figur 1 dargestellt, wobei die jeweils linke Säule die Viskosität der jeweiligen Polymermischung ohne Alterung, die jeweils rechte Säule die Viskosität nach der künstlichen Alterung zeigt. Die Werte machen deutlich, dass die erfindungsgemäßen Polymermischungen MTT1 und MTT2 eine deutlich geringere Änderung der Mooney-Viskosität durch die Alterung erleiden als die Vergleichsmischung ETU. Dies zeigt die höhere Lagerstabilität der vernetzbaren Polymermischung der Erfindung.

Die Figur 2 zeigt die Ergebnisse der Bestimmung der Mooney-Anvulkanisationszeit (Mooney Scorch) bei 121°C , einmal ohne Alterung (jeweils linke Säule), z.B. etwa 2-10 h nach Mischen der Bestandteile, und einmal nach künstlicher Alterung der vernetzbaren Polymermischungen durch Lagern bei 40°C für 7 d (Tage) (jeweils rechte Säule) als Beispiel für eine Lagerung der vernetzbaren Polymermischung vor der Extrusion und Vernetzung. Die Ergebnisse zeigen, dass das Vernetzungssystem der erfindungsgemäßen Polymermischungen MTT1 und MTT2 die Anvulkanisationszeit bzw. Anvernetzungszeit erhöht und damit die Verarbeitbarkeit günstig beeinflusst. Überdies zeigt die Figur 2, dass die Anvulkanisationszeit der erfindungsgemäßen vernetzbaren Polymermischung durch die künstliche Alterung, die eine Lagerung darstellt, weniger stark beeinflusst wird, als die Anvulkanisationszeit der Vergleichsmischung ETU durch die Lagerung beeinflusst wird.

Die mechanischen Eigenschaften der Polymermischung nach Vernetzung sind in Tabelle 3 gezeigt und machen deutlich, dass hinreichende mechanische Festigkeiten durch die erfindungsgemäßen vernetzten Polymermischungen erreicht werden. Die oben genannten vernetzbaren Polymermischungen wurden durch Erwärmen auf 180°C unter Druck, der durch einen Hydraulikstempel aufgebracht wurde, zu Probeplatten vernetzt.

**Tabelle 4: mechanische Festigkeiten vernetzter Polymermischungen**

| Härte | ETU | MTT1 | MTT2 |
|---|---|---|---|
| Zugfestigkeit [N/mm²] | 17,3 | 16,3 | 16,1 |
| Reißdehnung [%] | 710 | 791 | 803 |

Die Werte in Tabelle 4 wurden nach EN60811-1-1/9.1 bestimmt. Diese Werte zeigen, dass die erfindungsgemäßen Polymermischungen nach Vernetzung eine Zugfestigkeit und Reißdehnung aufweisen, die vergleichbar mit der ursprünglichen, ETU-haltigen Mischung sind und hinreichen, insbesondere zur Verwendung als Kabelmantel.

## Patentansprüche

1. Vernetzbare Polymermischung zur Verwendung als Mantelmischung für elektrische und/oder optische Kabel und Leitungen mit einem Gehalt an Polychloropren, die die folgenden Bestandteile enthält:
als Polymer 100 phr Polychloropren, das einen Anteil von 0 bis 40phr Naturkautschuk (NR) und/oder Styrol-Butadien-Kautschuk (SBR) aufweist,
20 bis 100 phr mineralischer Füllstoff,
optional Farbstoff,
zumindest einen Weichmacher,
Alterungsschutzmittel,
3 bis 16 phr Verarbeitungshilfsmittel,
optional 0,5 bis 4,0 phr Haftvermittler,
ein Vernetzungssystem, das 0,3 bis 2,0 phr Methyl-2-mercaptobenzimidazol, 0,5 bis 4,0 phr Silan, 0,5 bis 4,0 phr 3-Methyl-2-thiazolidinthion, und 0,3 bis 2 phr 2-Mercaptobenzothiazoldisulfid aufweist,
3 bis 6 phr Stabilisator,
3 bis 6 phr ZnO als Katalysator,
wobei kein N.N'-Ethylenthioharnstoff enthalten ist.

2. Polymermischung nach einem der voranstehenden Ansprüche, **dadurch gekennzeichnet, dass** das Polymer aus 100 phr schwefelfreiem Polychloropren besteht.

3. Polymermischung nach einem der voranstehenden Ansprüche, **dadurch gekennzeichnet, dass** der mineralische Füllstoff 40 bis 100 phr Kieselsäure aufweist.

4. Polymermischung nach einem der voranstehenden Ansprüche, **dadurch gekennzeichnet, dass** der mineralische Füllstoff 5 bis 40 phr Kaolin aufweist.

5. Polymermischung nach einem der voranstehenden Ansprüche, **dadurch gekennzeichnet, dass** der Weichmacher zu 2 bis 30 phr enthalten ist.

6. Polymermischung nach einem der voranstehenden Ansprüche, **dadurch gekennzeichnet, dass** Alterungsschutzmittel zu 2 bis 10 phr enthalten ist.

7. Polymermischung nach einem der voranstehenden Ansprüche, **dadurch gekennzeichnet, dass** sie nach künstlicher Alterung bei 40 °C für 7 Tage eine Mooney-Scorchzeit MST5 von zumindest 13 min, gemessen bei 121 °C, wie in der Beschreibung beschrieben, und eine Erhöhung der Money-Viskosität nach Lagerung um maximal 6 ME aufweist, ML1+4 gemessen bei 100°C, wie in der Beschreibung beschrieben.

8. Polymermischung nach einem der voranstehenden Ansprüche, **dadurch gekennzeichnet, dass** sie nach Vernetzung eine Zugfestigkeit von zumindest 14 N/mm² und eine Reißdehnung von zumindest 500% aufweist, gemessen nach EN60811-1-1/9.1.

9. Kabel oder Leitung mit einem Mantel aus einer Polymermischung nach Anspruch 8.

10. Verfahren zur Herstellung von Kabeln oder Leitungen mit Extrusion einer vernetzbaren Polymermischung und anschließender Vernetzung, **dadurch gekennzeichnet, dass** die vernetzbare Polymermischung eine nach einem der Ansprüche 1 bis 8 ist.

11. Verfahren nach Anspruch 10, **dadurch gekennzeichnet, dass** die vernetzbare Polymermischung durch Mischen von
100 phr Polychloropren und/oder NR und oder SBR,
40 bis 1000 phr mineralischer Füllstoff,
optional Farbstoff,
zumindest einen Weichmachers,
Alterungsschutzmittel,
3 bis 16 phr Verarbeitungshilfsmittel,
optional 0,5 bis 4,0 phr Haftvermittler,
ein Vernetzungssystem, das 0,3 bis 2,0 phr Methyl-2-mercaptobenzimidazol, 0,5 bis 4,0 phr Trimethoxyvinylsilan, 0,5 bis 4,0 phr 3-Methyl-2-thiazolidinthion, und 0,3 bis 2 phr 2-Mercaptobenzothiazoldisulfid aufweist,
3 bis 6 phr Stabilisator,
3 bis 6 phr ZnO als Katalysator erzeugt wird.

12. Verfahren nach einem der Ansprüche 10 bis 11, **dadurch gekennzeichnet, dass** die vernetzbare Polymermischung vor der Extrusion und Vernetzung unter Bedingungen gelagert wird, die einer künstlichen Alterung von zumindest 5 d bei 40°C entsprechen.

13. Verfahren nach einem der Ansprüche 10 bis 12, **dadurch gekennzeichnet, dass** die Vernetzung bei zumindest 150 °C erfolgt.

## Claims

1. Crosslinkable polymer mixture for use as a sheath compound for electrical and/or optical cables and wiring containing a polychloroprene containing the following components:
- 100 phr of polychloroprene as a polymer comprising a proportion of 0 to 40 phr of natural rubber (NR) and/or styrene butadiene rubber (SBR)
- 20 to 100 phr of mineral filler,
- optional dye,
- at least one plasticizer,
- antioxidants,
- 3 to 16 phr processing aids,
- optional 0.5 to 4.0 phr of adhesion promoter,
- a crosslinking system comprising 0.3 to 2.0 phr of methyl 2-mercaptobenzimidazole, 0.5 to 4.0 phr of silane, 0.5 to 4.0 phr of 3-methyl-2-thiazolidinethione, and 0.3 to 2.0 phr of 2-mercaptobenzothiazole disulfide,
- 3 to 6 phr of stabilizer,
- 3 to 6 phr of ZnO as catalyst,
- wherein no N,N'-ethylene thiourea is contained therein.

2. Polymer mixture according to one of the preceding claims,
**characterized in that**
the polymer consists of 100 phr of sulfur-free polychloroprene.

3. Polymer mixture according to one of the preceding claims,
**characterized in that**
the mineral filler comprises 40 to 100 phr of silica.

4. Polymer mixture according to one of the preceding claims,
**characterized in that**
the mineral filler comprises 5 to 40 phr of kaolin.

5. Polymer mixture according to one of the preceding claims,
**characterized in that**
it contains 2 to 30 phr the plasticizer.

6. Polymer mixture according to one of the preceding claims,
**characterized in that**
it contains 2 to 10 phr of the antioxidant.

7. Polymer mixture according to one of the preceding claims,
**characterized in that**
after artificial aging at 40 °C for 7 days, it comprises a Mooney scorch time MST5 of at least 13 min. measured at 121 °C as described in the description, and an increase in Mooney viscosity after storage by a maximum of 6 ME, ML1+4 measured at 100 °C, as described in the description.

8. Polymer mixture according to one of the preceding claims,
**characterized in that**
it comprises a tensile strength of at least 14 N/mm² and an elongation at break of at least 500%, measured according to EN 60811-1-1/9.1.

9. Cable or wire with a sheath of a polymer compound according to claim 8.

10. Method for producing cables or wiring with extrusion of a crosslinkable polymer compound and subsequent crosslinking,
**characterized in that**
the crosslinkable polymer compound is according to one of the claims 1 to 8.

11. Method according to claim 10,
**characterized in that**
the crosslinkable polymer compound is prepared by mixing
- 100 phr of polychloroprene and/or NR and or SBR,
- 40 to 1000 phr of mineral filler,
- optional dye,
- at least one plasticizer,
- antioxidants,
- 3 to 16 phr processing aids,
- optional 0.5 to 4.0 phr of adhesion promoter,
- a crosslinking system comprising 0.3 to 2.0 phr of methyl 2-mercaptobenzimidazole, 0.5 to 4.0 phr of trimethoxyvinylsilane, 0.5 to 4.0 phr of 3-methyl-2-thiazolidinethione, and 0.3 to 2.0 phr 2 phr of 2-mercaptobenzothiazole disulfide,
- 3 to 6 phr of stabilizer,
- 3 to 6 phr of ZnO as a catalyst.

12. Method according to one of the claims 10 to 11,
**characterized in that**
the crosslinkable polymer compound is stored before extrusion and crosslinking, under conditions which correspond to an artificial aging of at least 5 days at 40 °C.

13. Method according to one of the claims 10 to 12,
**characterized in that**
that the crosslinking takes place at 150 °C at least.

## Revendications

1. Mélange réticulable de polymères, destiné à une utilisation en tant que mélange de gaine pour câbles et lignes électriques et/ou optiques, contenant du polychloroprène, et qui contient les constituants suivants l
en tant que polymère, 100 phr de polychloroprène, qui présente une proportion de 0 à 40 phr de caoutchouc naturel (NR) et/ou d'un caoutchouc styrène-butadiène (SBR),
20 à 100 phr d'une matière de charge minérale,
en option, un colorant,
au moins un plastifiant,
un agent de protection contre le vieillissement,
3 à 16 phr d'un auxiliaire de mise en oeuvre,
en option, 0,5 à 4,0 phr d'un promoteur d'adhérence,
un système de réticulation, qui présente 0,3 à 2,0 phr de méthyl-2-mercaptobenzimidazole, 0,5 à 4,0 phr de silane, 0,5 à 4,0 phr de 3-méthyl-2-thiazolidinethione, et 0,3 à 2 phr de disulfure de 2-mercaptobenzothiazole,
3 à 6 phr d'un stabilisant,
3 à 6 phr de ZnO servant de catalyseur,
le mélange ne contenant pas de N,N'-éthylènethiourée.

2. Mélange de polymères selon l'une des revendications précédentes, **caractérisé en ce que** le polymère est constitué de 100 phr de polychloroprène sans soufre.

3. Mélange de polymères selon l'une des revendications précédentes, **caractérisé en ce que** la matière de charge minérale comprend 40 à 100 phr de silice.

4. Mélange de polymères selon l'une des revendications précédentes, **caractérisé en ce que** la matière de charge minérale comprend 5 à 40 phr de kaolin.

5. Mélange de polymères selon l'une des revendications précédentes, **caractérisé en ce qu'**il contient le plastifiant en une quantité de 2 à 30 phr.

6. Mélange de polymères selon l'une des revendications précédentes, **caractérisé en ce qu'**il contient l'agent de protection contre le vieillissement en une quantité de 2 à 10 phr.

7. Mélange de polymères selon l'une des revendications précédentes, **caractérisé en ce qu'**il présente, après 7 jours de vieillissement artificiel à 40°C, un temps de grillage Mooney MST5 d'au moins 13 minutes, mesuré à 121°C comme décrit dans la description, et une élévation de la viscosité Mooney après stockage au maximum de 6 unités Mooney, ML1+4, mesurée à 100°C comme décrit dans la description.

8. Mélange de polymères selon l'une des revendications précédentes, **caractérisé en ce qu'**il présente après réticulation une résistance à la traction d'au moins 14 N/mm² et un allongement à la rupture d'au moins 500 %, mesurées selon EN60811-1-1/9.1.

9. Câble ou ligne, comprenant une gaine en un mélange de polymères selon la revendication 8.

10. Procédé de fabrication de câbles ou de lignes par extrusion d'un mélange réticulable de polymères, suivie d'une réticulation, **caractérisé en ce que** le mélange réticulable de polymères est un tel mélange selon l'une des revendications 1 à 8.

11. Procédé selon la revendication 10, **caractérisé en ce que** le mélange réticulable de polymères est produit par mélange de
100 phr de polychloroprène et/ou de NR et/ou de SBR,
40 à 1000 phr d'une matière de charge minérale,
20 à 100 phr d'une matière de charge minérale,
en option, un colorant,
au moins un plastifiant,
un agent de protection contre le vieillissement,
3 à 16 phr d'un auxiliaire de mise en oeuvre,
en option, 0,5 à 4,0 phr d'un promoteur d'adhérence,
un système de réticulation, qui présente 0,3 à 2,0 phr de méthyl-2-mercaptobenzimidazole, 0,5 à 4,0 phr de silane, 0,5 à 4,0 phr de 3-méthyl-2-thiazolidinethione, et 0,3 à 2 phr de disulfure de 2-mercaptobenzothiazole,
3 à 6 phr d'un stabilisant,
3 à 6 phr de ZnO servant de catalyseur.

12. Procédé selon l'une des revendications 10 à 11, **caractérisé en ce que** le mélange réticulable de polymères est, avant l'extrusion et la réticulation, stocké dans des conditions qui correspondent à un vieillissement artificiel d'au moins 5 jours à 40°C.

13. Procédé selon l'une des revendications 10 à 12, **caractérisé en ce que** la réticulation a lieu à au moins 150°C.
